Europäisches Patentamt

European Patent Office

Office européen des brevets

(19)

(11) Numéro de publication: **0 193 430**
**B1**

(12) **FASCICULE DE BREVET EUROPEEN**

(45) Date de publication du fascicule du brevet:
**11.05.88**

(51) Int. Cl.⁴: **B 60 R 25/00**

(21) Numéro de dépôt: **86400193.8**

(22) Date de dépôt: **30.01.86**

(54) **Dispositif d'enclenchement d'un appareil anti-vol d'un véhicule automobile pour véhicule comportant une condamnation électrique des portes.**

(30) Priorité: **18.02.85 FR 8502531**

(43) Date de publication de la demande:
**03.09.86 Bulletin 86/36**

(45) Mention de la délivrance du brevet:
**11.05.88 Bulletin 88/19**

(84) Etats contractants désignés:
**DE GB IT**

(56) Documents cités:
**WO - A - 80/01477**
**FR - A - 2 213 858**
**US - A - 4 297 674**

(73) Titulaire: **AUTOMOBILES PEUGEOT, 75, avenue de la Grande Armée, F-75116 Paris (FR)**
Titulaire: **AUTOMOBILES CITROEN, 62 Boulevard Victor-Hugo, F-92200 Neuilly-sur-Seine (FR)**

(72) Inventeur: **Herbault, Patrick, 94, rue Thiers, F-92100 Boulogne-Billancourt (FR)**

(74) Mandataire: **Boivin, Claude, 9, rue Edouard-Charton, F-78000 Versailles (FR)**

## Description

Un appareil antivol de véhicule automobile peut être enclenché simplement par la manœuvre du contact de batterie du véhicule. Mais un tel appareil est ennuyeux, voire dangereux si, à chaque manœuvre ou lors d'un calage du véhicule, le conducteur est obligé de renouveler une procédure d'inhibition de l'antivol, par exemple en composant un code sur un clavier.

On peut prévoir un bouton particulier d'enclenchement de l'appareil antivol: mais cette solution présente l'inconvénient de nécessiter une manœuvre supplémentaire de la part de l'usager.

La présente invention a pour objet un dispositif d'enclenchement d'un appareil antivol pour véhicule automobile comportant une condamnation électrique des portes.

Ce dispositif est caractérisé en ce que la logique de commande de l'appareil antivol est alimentée en parallèle par le contact de batterie et par un contact du relais de commande de la condamnation des portes, et en ce qu'il comprend un moyen pour détecter la présence de la tension en aval du contact de batterie, et un moyen pour mémoriser l'enclenchement de l'appareil antivol lorsque cette tension est nulle.

Grâce au fait que le dispositif comprend un moyen pour détecter la présence de la tension en aval du contact de batterie, il fait la différence entre le cas du conducteur qui verrouille ses portes de l'extérieur pour protéger son véhicule du vol et le conducteur qui, en cours de roulage, verrouille ses portes dans un souci de protection contre des agressions extérieures.

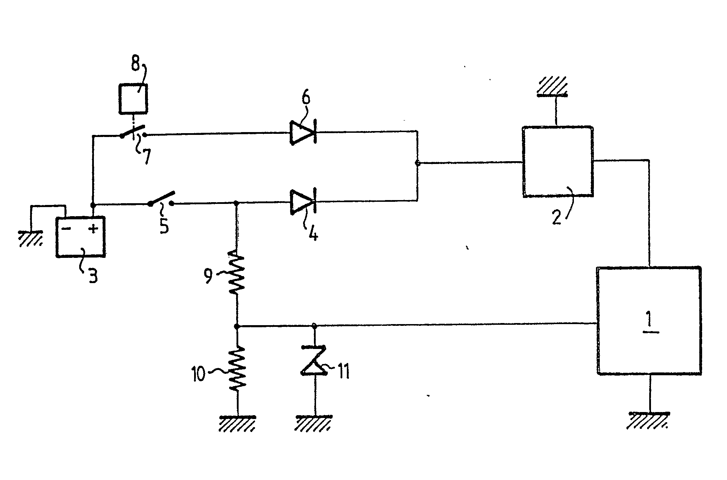

On a décrit ci-après, à titre d'exemple non limitatif, un mode de réalisation du dispositif d'enclenchement selon la présente invention avec référence à la figure unique du dessin annexé qui est un schéma de ce dispositif.

Au dessin, on voit en 1 la logique de l'appareil antivol qui peut être simple ou sophistiquée dans le cas d'un processeur associé à une mémoire non volatile.

Cette logique est alimentée, de préférence par l'intermédiaire d'un régulateur de tension 2, par deux circuits branchés en parallèle. Le premier circuit est connecté à la batterie 3 par l'intermédiaire d'une diode 4 et du contact de batterie 5. Le second est connecté à la batterie par l'intermédiaire d'une diode 6 et d'un contact 7 du relais 8 de condamnation électrique des portes.

La logique 1 qui est alimentée aussi bien lorsque le contact de batterie 5 est établi que lorsque le relais 8 est fermé, comporte des moyens pour vérifier l'ouverture du contact de batterie 5. Cette mesure est effectuée à travers un pont diviseur formé de deux résistances 9 et 10 et déterminée en fonction du rapport entre la tension de la batterie 3 et la tension d'alimentation de la logique. Il peut être prévu un élément de protection, par exemple une diode Zener 11. La prise d'information de la logique peut s'effectuer par exemple par l'intermédiaire d'un comparateur, d'une simple porte ou d'une entrée de port d'un microprocesseur.

Lorsque le contact de batterie 5 est fermé, le circuit de vérification de la logique 1 reçoit un signal positif qui inhibe le fonctionnement de l'antivol. En revanche, lorsqu'il est ouvert, le circuit de vérification est à la masse et l'antivol est en fonctionnement.

La mémorisation de l'enclenchement de l'appareil antivol peut être effectuée par une mémoire non volatile ou par une alimentation partielle permanente par la batterie.

## Revendication

Dispositif d'enclenchement d'un appareil antivol pour véhicule automobile comportant une condamnation électrique des portes, caractérisé en ce que la logique de commande (1) de l'appareil antivol est alimentée en parallèle par le contact de batterie (5) et par le contact (7) du relais de commande (8) de la condamnation des portes, et en ce qu'il comprend un moyen (9-10) pour détecter la présence de la tension en aval du contact de batterie (5), et un moyen pour mémoriser l'enclenchement de l'appareil antivol lorsque cette tension est nulle.

## Patentanspruch

Vorrichtung zum Einschalten einer Antidiebstahleinrichtung für ein Kraftfahrzeug, das eine elektrische Türverriegelung aufweist, dadurch gekennzeichnet, dass die Speisung für die Steuerlogik (1) der Antidiebstahleinrichtung parallel über den Batteriekontakt (5) und den Kontakt (7) des Steuerrelais (8) der Türverriegelung erfolgt und dass sie Mittel (9-10) zum Erkennen des Vorhandenseins einer Spannung hinter dem Batteriekontakt (5) aufweist und ein Mittel zum Einspeichern des Einschaltens der Antidiebstahleinrichtung, wenn diese Spannung den Wert Null aufweist.

## Claim

Tripping device for an antiheft apparatus for motor vehicles including an electric device for putting the doors out of use, characterized in that the control logic (1) of the antitheft device is fed in parallel by the ignition switch (5) and by the contact (7) of the control relay (8) for putting the doors out of use, and in that it includes a means (9-10) for detecting the presence of the voltage downstream of the ignition switch (5), and a means for memorizing the tripping of the antitheft device when this voltage is zero.